# EUROPEAN PATENT APPLICATION

(11) **EP 3 244 569 A1**
(43) Date of publication of application: **15.11.2017**
(21) Application number: 15876596.6
(22) Date of filing: 29.07.2015
(51) Int. Cl.: H04L 12/24

(54) **ASSET INFORMATION MANAGEMENT METHOD AND DEVICE**

(30) Priority: 08.01.2015 CN 201510012552
(71) Applicant: ZTE Corporation, Shenzhen, Guangdong 518057 (CN)
(72) Inventor: CHEN, Liping, Shenzhen Guangdong 518057 (CN); XIAO, Weijin, Shenzhen Guangdong 518057 (CN); ZHU, Weihong, Shenzhen Guangdong 518057 (CN)
(74) Representative: Deambrogi, Edgardo
(86) International application number: PCT/CN2015/085467
(87) International publication number: WO 2016/110092

(57) **Abstract**

A method and device for asset information management is provided. The method includes that: a Virtualized Infrastructure Manager (VIM) receives a request message from a Network Function Virtualization Orchestrator (NFVO), and the request message is used for acquiring Network Function Virtualization Infrastructure (NFVI) asset information, and the NFVI asset information includes at least one of an NFVI hardware asset and an NFVI software asset; the VIM acquires the NFVI asset information according to the request message; and the VIM sends the NFVI asset information to the NFVO. According to the technical solution provided in the present invention, an operator can fully know asset information, including hardware asset information and software asset information, of each access point after network function virtualization, so as to facilitate topology presentation.

## Description

### Technical Field

The present invention relates to the field of communications, and in particular to a method and device for asset information management.

### Background

In current network architecture, there is a super strong coupling relationship between network functions and network devices, and all network functions are realized by means of specifically designed and proprietary devices of manufactures, which brings a lot of inconvenience. For example, an improvement of performance of these devices is limited to a development of hardware which satisfies specific or customized needs as well as keeping carrier-level reliability. For another example, when an operator needs to deploy a new service, it is necessary to deploy newly designed devices with related dedicated functions in advance, which increases the cost of service deployment of the operator. On the other hand, with a rapid improvement of performance of a Central Processing Unit (CPU) and a memory, running network functions on a general server in a form of software has a certain basic condition, and a Network Function Virtualization (NFV) technology emerges at the right moment, which aims to run the network function on a general hardware device, thereby reducing a Capital Expenditure (CAPEX) through an extensive deployment. "Virtualization" enables network functions to be deployed and updated as needed, and greatly facilitates remote management and maintenance, thereby reducing an Operation Expenditure (OPEX).

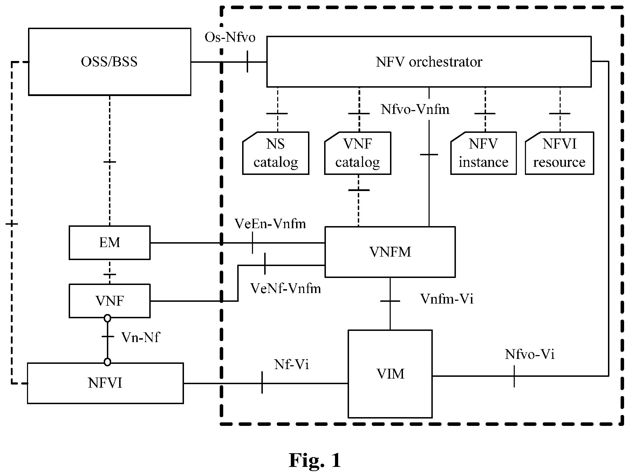

Fig. 1 is a schematic diagram of an architecture and reference point of NFV Management and Orchestration (NFV-MANO) according to the related art. As shown in Fig. 1, a Network Function Virtualization Orchestrator (NFVO) takes charge of statement period management of network services, Network Function Visualization Infrastructure (NFVI) resources scheduling cross a Virtualized Infrastructure Manager (VIM) and other functions. A VNF manager takes charge of statement period management of a VNF instance, and it is assumed that each VNF instance has a VNFM associated with this VNF. The VIM takes charge of controlling and managing NFVI computation, storage and network resources.

In a traditional Network Management System (NMS), the NMS acquires asset information of each of at least one network element through an Element Management System (EMS). After network function visualization, the EMS takes charge of managing a VNF application layer, and software and hardware resources are managed through the VIM. However, for enabling the operator to fully know asset after network function visualization for topology presentation, the NMS or an Operation Support System (OSS) is also able to acquire the asset information.

To sum up, in the related art, the asset information of network infrastructure is not acquired effectively after network function visualization.

### Summary

At least some embodiments of present invention provide a method and device for asset information management, so as at least to partially solve a problem in the related art that asset information of network infrastructure is not acquired effectively after network function visualization.

In an embodiment of the present invention, a method for asset information management is provided, which includes that: receiving, by a Virtualized Infrastructure Manager (VIM), a request message from a Network Function Virtualization Orchestrator (NFVO), and the request message is used for acquiring Network Function Virtualization Infrastructure (NFVI) asset information, and the NFVI asset information includes at least one of an NFVI hardware asset and an NFVI software asset; acquiring, by the VIM, the NFVI asset information according to the request message; and sending, by the VIM, the NFVI asset information to the NFVO.

In one embodiment, before receiving, by the VIM, the request message from the NFVO, further including: establishing, by the VIM, an asset information base according to NFVI information.

In one embodiment, acquiring, by the VIM, the NFVI asset information according to the request message includes: acquiring, by the VIM, the NFVI asset information from the asset information base according to the request message.

In one embodiment, establishing, by the VIM, the asset information base includes: creating, by the VIM, a managed object instance representing an NFVI access point; creating, by the VIM, a managed object instance representing a resource pool; creating, by the VIM, at least one managed object instance representing an NFVI hardware asset, and/or creating at least one managed object instance representing an NFVI software asset; and, the managed object instance representing the NFVI access point includes the managed object instance representing the resource pool, and the managed object instance representing the resource pool includes at least one of at least one managed object instance representing the NFVI hardware asset and at least one managed object instance representing the NFVI software asset.

In one embodiment, establishing, by the VIM, the asset information base includes: creating, by the VIM, the managed object instance representing an NFVI access point; creating, by the VIM, at least one managed object instance representing the NFVI hardware asset, and/or creating at least one managed object instance representing the NFVI software asset; and, the managed object instance representing the NFVI access point includes at least one of at least one managed object instance representing the NFVI hardware asset and at least one managed object instance representing the NFVI software asset.

In another embodiment of the present invention, another method for asset information management is provided, which includes that: receiving, by a Network Function Virtualization Orchestrator (NFVO), a request message from a Network Management System (NMS) or Operation Support System (OSS), and the request message is used for acquiring Network Function Virtualization Infrastructure (NFVI) asset information, and the NFVI asset information includes at least one of an NFVI hardware asset and an NFVI software asset; acquiring, by the NFVO, the NFVI asset information according to the request message; and sending, by the NFVO, the NFVI asset information to the NMS or OSS.

In one embodiment, acquiring, by the NFVO, the NFVI asset information according to the request message includes: sending, by the NFVO, the request message to a Virtualized Infrastructure Manager (VIM); and receiving, by the NFVO, the NFVI asset information from the VIM, and the NFVI asset information is determined according to an asset information base established by the VIM.

In one embodiment, before receiving, by the NFVO, the request message from the NMS or OSS, further including: establishing, by the NFVO, an asset information base according to the NFVI information acquired from the VIM.

In one embodiment, acquiring, by the NFVO, the NFVI asset information according to the request message includes: acquiring, by the NFVO, the NFVI asset information from the asset information base according to the request message.

In one embodiment, establishing, by the NFVO, the asset information base according to the NFVI information includes: creating, by the NFVO, a managed object instance representing an NFVI access point; creating, by the NFVO, a managed object instance representing a resource pool; creating, by the NFVO, at least one managed object instance representing an NFVI hardware asset, and/or creating at least one managed object instance representing an NFVI software asset; and, the managed object instance representing the NFVI access point includes the managed object instance representing the resource pool, and the managed object instance representing the resource pool includes at least one of at least one managed object instance representing the NFVI hardware asset and at least one managed object instance representing the NFVI software asset.

In one embodiment, establishing, by the NFVO, the asset information base according to the NFVI information includes: creating, by the NFVO, the managed object instance representing the NFVI access point; creating, by the NFVO, at least one managed object instance representing the NFVI hardware asset, and/or creating at least one managed object instance representing the NFVI software asset; and, the managed object instance representing the NFVI access point includes at least one of at least one managed object instance representing the NFVI hardware asset and at least one managed object instance representing the NFVI software asset.

In another embodiment of the present invention, a device for asset information management is provided, which includes: a receiving component to receive a request message from a Network Function Virtualization Orchestrator (NFVO), and the request message is used for acquiring Network Function Virtualization Infrastructure (NFVI) asset information, and the NFVI asset information includes at least one of an NFVI hardware asset and an NFVI software asset; an acquiring component to acquire the NFVI asset information according to the request message; and a sending component to send the NFVI asset information to the NFVO.

In one embodiment, the device further includes: an establishing component to establish an asset information base according to NFVI information.

In one embodiment, the acquiring component is configured to acquire the NFVI asset information from the asset information base according to the request message.

In one embodiment, the establishing component includes: a first creating element to create a managed object instance representing an NFVI access point; a second creating element to create a managed object instance representing a resource pool; a third creating element to create at least one managed object instance representing an NFVI hardware asset, and/or create at least one managed object instance representing an NFVI software asset; and, the managed object instance representing the NFVI access point includes the managed object instance representing the resource pool, and the managed object instance representing the resource pool includes at least one of at least one managed object instance representing the NFVI hardware asset and at least one managed object instance representing the NFVI software asset.

In one embodiment, the establishing component includes: a fourth creating element to create the managed object instance representing the NFVI access point; a fifth creating element to create at least one managed object instance representing the NFVI hardware asset, and/or create at least one managed object instance representing the NFVI software asset; and, the managed object instance representing the NFVI access point includes at least one of at least one managed object instance representing the NFVI hardware asset and at least one managed object instance representing the NFVI software asset.

In another embodiment of the present invention, another device for asset information management is provided, which includes: a receiving component to receive a request message from a Network Management System (NMS) or Operation Support System (OSS), and the request message is used for acquiring Network Function Virtualization Infrastructure (NFVI) asset information, and the NFVI asset information includes at least one of an NFVI hardware asset and an NFVI software asset; an acquiring component to acquire the NFVI asset information according to the request message; and a sending component to send the NFVI asset information to the NMS or OSS.

In one embodiment, the acquiring component includes: a sending unit to send the request message to a Virtualized Infrastructure Manager (VIM); and a receiving unit to receive the NFVI asset information from the VIM, and the NFVI asset information is determined according to an asset information base established by the VIM.

In one embodiment, the device further includes: an establishing component to establish an asset information base according to the NFVI information acquired from the VIM.

In one embodiment, the acquiring component includes: an acquiring element to acquire the NFVI asset information from the asset information base according to the request message.

In one embodiment, the establishing component includes: a first creating element to create a managed object instance representing an NFVI access point; a second creating element to create a managed object instance representing a resource pool; a third creating element to create at least one managed object instance representing the NFVI hardware asset, and/or create at least one managed object instance representing the NFVI software asset; and, the managed object instance representing the NFVI access point includes the managed object instance representing the resource pool, and the managed object instance representing the resource pool includes at least one of at least one managed object instance representing the NFVI hardware asset and at least one managed object instance representing the NFVI software asset.

In one embodiment, the establishing component includes: a fourth creating element to create the managed object instance representing the NFVI access point; a fifth creating element to create at least one managed object instance representing the NFVI hardware asset, and/or create at least one managed object instance representing the NFVI software asset; and the managed object instance representing the NFVI access point includes at least one of at least one managed object instance representing the NFVI hardware asset and at least one managed object instance representing the NFVI software asset.

According to the at least some embodiments of the present invention, the VIM receives the request message from the NFVO, and the request message is used for acquiring the NFVI asset information, and the NFVI asset information includes at least one of the NFVI hardware asset and the NFVI software asset; the VIM acquires the NFVI asset information according to the request message; and the VIM sends the NFVI asset information to the NFVO. In such a manner, the problem in the related art that the asset information of the network element is not acquired effectively after network function visualization, so that an operator can fully know the asset information, including hardware asset information and software asset information, of each access point after network function virtualization, so as to facilitate topology presentation.

### Brief Description of the Drawings

The accompanying drawings described here are used for providing a deeper understanding of the present invention, and constitute a part of the application; schematic embodiments of the present invention and description thereof are used for illustrating the present invention and not intended to form an improper limit to the present invention. In the accompanying drawings:
Fig. 1 is a schematic diagram of an architecture and reference point of NFV-MANO according to the related art.
Fig. 2 is a flowchart of a method for asset information management according to an embodiment of the present invention.
Fig. 3 is a flowchart of another method for asset information management according to an embodiment of the present invention.
Fig. 4 is a schematic diagram of an information model according to an exemplary embodiment of the present invention.
Fig. 5 is a schematic diagram of constructing a hardware asset information base based on the information model shown in Fig. 4 according to a first exemplary embodiment of the present invention.
Fig. 6 is a schematic diagram of constructing a hardware asset information base based on the information model shown in Fig. 4 according to a second exemplary embodiment of the present invention.
Fig. 7 is a schematic diagram of another information model according to an exemplary embodiment of the present invention.
Fig. 8 is a schematic diagram that a VIM constructs, based on an extended information model and according to hardware and software information of an NFVI, an asset information base according to an exemplary embodiment of the present invention.
Fig. 9 is a schematic diagram of building a new information model for an NFVI asset according to an exemplary embodiment of the present invention.
Fig. 10 is a schematic diagram that a VIM constructs, based on a new information model and according to hardware and software information of an NFVI, an asset information base according to an exemplary embodiment of the present invention.
Fig. 11 is a schematic diagram of building a new information model based on an NFVI asset according to an exemplary embodiment of the present invention.
Fig. 12 is a schematic diagram that a VIM constructs, based on a new information model and according to hardware and software information of an NFVI, an asset information base according to an exemplary embodiment of the present invention.
Fig. 13 is a structural block diagram of a device for asset information management according to an embodiment of the present invention.
Fig. 14 is a structural block diagram of a device for asset information management according to an exemplary embodiment of the present invention.
Fig. 15 is a structural block diagram of another device for asset information management according to an embodiment of the present invention.
Fig. 16 is a structural block diagram of another device for asset information management according to an exemplary embodiment of the present invention.

### Detailed Description of the Embodiments

The present invention is elaborated below with reference to the accompanying drawings and embodiments. Note that, the embodiments of the present invention and the characteristics in the embodiments can be combined under the condition of no conflicts.

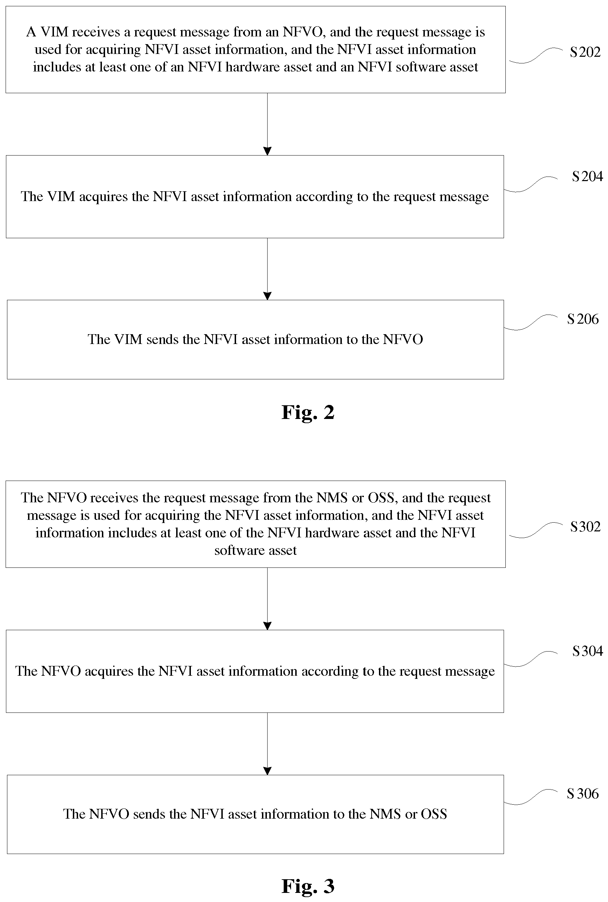

Fig. 2 is a flowchart of a method for asset information management according to an embodiment of the present invention. As show in Fig. 2, the method includes the following processing steps.

At step S202, a VIM receives a request message from an NFVO, and the request message is used for acquiring NFVI asset information, and the NFVI asset information includes at least one of an NFVI hardware asset and an NFVI software asset.

At step S204, the VIM acquires the NFVI asset information according to the request message.

At step S206, the VIM sends the NFVI asset information to the NFVO.

In the related art, the asset information of network infrastructure is not acquired effectively after network function visualization. By using the method as shown in Fig. 2, that is, the NFVO receives from an NMS or OOS the request message for acquiring the NFVI asset information, and forwards the request message to the VIM, and the VIM forwards the NFVI asset information to the NMS or OSS after acquiring the NFVI asset information according to the request message. The problem in the related art that the asset information of network infrastructure is not acquired effectively after network function visualization is solved, so that an operator can fully know the asset information, including hardware asset information and software asset information, of each access point after network function virtualization, so as to facilitate topology presentation.

In one embodiment, before the VIM receives the request message from the NFVO in S202, the method further includes the following steps.

At step S1, the VIM establishes an asset information base according to NFVI information.

In one embodiment, in S204, the VIM acquires the NFVI asset information according to the request message includes the following operation.

At step S2, the VIM acquires the NFVI asset information from the asset information base according to the request message.

In one embodiment, in S1, the VIM establishes the asset information base includes the following steps.

At step S11, the VIM creates a managed object instance representing an NFVI access point.

At step S12, the VIM creates a managed object instance representing a resource pool.

At step S13, the VIM creates at least one managed object instance representing the NFVI hardware asset, and/or creates at least one managed object instance representing the NFVI software asset.

And the managed object instance representing the NFVI access point includes the managed object instance representing the resource pool, and the managed object instance representing the resource pool includes at least one of at least one managed object instance representing the NFVI hardware asset and at least one managed object instance representing the NFVI software asset.

In an exemplary embodiment, the VIM establishes the asset information base in the following way:
1) creating the managed object instance representing the NFVI access point;
2) creating the managed object instance representing the resource pool;
3) creating one or more managed object instances representing the NFVI hardware asset, and the types of the managed object instances representing the NFVI hardware asset include, but are not limited to, pack, magnetic matrix, switch, rack, shelf and pack;
4) creating at least one managed object instance representing the NFVI software asset, and the types of the managed object instances representing the NFVI software asset include, but are not limited to, a Virtual Machine Image (VMImage) file, antivirus software, and hot standby software;
the mutual relationship of the above managed object instances is that: the managed object instance representing the NFVI access point includes at least one managed object instance representing the resource pool, and the managed object instance representing the resource pool includes at least one of at least one managed object instance representing the NFVI hardware asset and at least one managed object instance representing the NFVI software asset.

In one embodiment, in step S1, the VIM establishes the asset information base includes the following steps.

At step S14, the VIM creates the managed object instance representing the NFVI access point.

At step S15, the VIM creates at least one managed object instance representing the NFVI hardware asset, and/or creates at least one managed object instance representing the NFVI software asset.

And the managed object instance representing the NFVI access point includes at least one of at least one managed object instance representing the NFVI hardware asset and at least one managed object instance representing the NFVI software asset.

In an exemplary embodiment, the VIM establishes the asset information base in the following way:
1) creating the managed object instance representing the NFVI access point;
2) creating at least one managed object instance representing the NFVI hardware asset, and the types of the managed object instances representing the NFVI hardware asset include, but are not limited to, pack, magnetic matrix, switch, rack, shelf, and pack;
3) creating at least one managed object instance representing the NFVI software asset, and the types of the managed object instances representing the NFVI software asset include, but are not limited to, the VMImage file, antivirus software, and hot standby software;
the mutual relationship of the above managed object instances is that: the managed object instance representing the NFVI access point includes at least one of at least one managed object instance representing the NFVI hardware asset and at least one managed object instance representing the NFVI software asset.

Fig. 3 is a flowchart of another method for asset information management according to an embodiment of the present invention. As shown in Fig. 3, the method includes the following processing steps.

At step S302, the NFVO receives the request message from the NMS or OSS, and the request message is used for acquiring the NFVI asset information, and the NFVI asset information includes at least one of the NFVI hardware asset and the NFVI software asset.

At step S304, the NFVO acquires the NFVI asset information according to the request message.

At step S306, the NFVO sends the NFVI asset information to the NMS or OSS.

In one embodiment, in step S304, the NFVO acquires the NFVI asset information according to the request message includes the following operations.

At step S3, the NFVO sends the request message to the VIM.

At step S4, the NFVO receives the NFVI asset information from the VIM, and the NFVI asset information is determined according to the asset information base established by the VIM.

In one embodiment, in step S302, before the NFVO receives the request message from the NMS or OSS, the method further includes the following step.

At step S5, the NFVO establishes an asset information base according to the NFVI information acquired from the VIM.

In one embodiment, in step S304, the NFVO acquires the NFVI asset information according to the request message includes the following step.

At step S6, the NFVO acquires the NFVI asset information from the asset information base according to the request message.

In one embodiment, in step S5, the NFVO establishes the asset information base according to the NFVI information includes the following operations.

At step S51, the NFVO creates the managed object instance representing the NFVI access point.

At step S52, the NFVO creates the managed object instance representing the resource pool.

At step S53, the NFVO creates at least one managed object instance representing the NFVI hardware asset, and/or creates at least one managed object instance representing the NFVI software asset.

And the managed object instance representing the NFVI access point includes the managed object instance representing the resource pool, and the managed object instance representing the resource pool includes at least one managed object instance representing the NFVI hardware asset and/or at least one managed object instance representing the NFVI software asset.

In one embodiment, in step S5, the NFVO establishes the asset information base according to the NFVI information includes the following steps.

At step S54, the NFVO creates the managed object instance representing the NFVI access point.

At step S55, the NFVO creates at least one managed object instance representing the NFVI hardware asset, and/or creates at least one managed object instance representing the NFVI software asset.

And the managed object instance representing the NFVI access point includes at least one of at least one managed object instance representing the NFVI hardware asset and at least one managed object instance representing the NFVI software asset.

The above exemplary implementation process is further described below in combination with several exemplary embodiments as follows.

### Example embodiment one

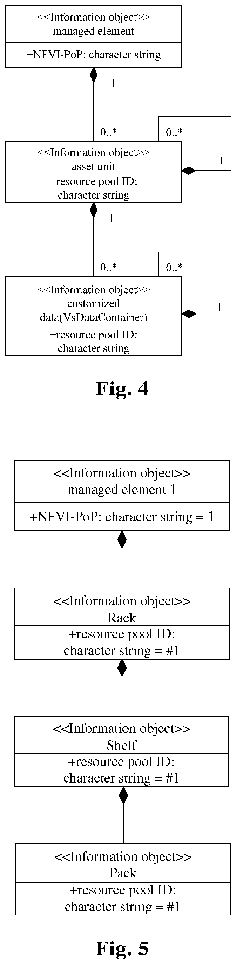

In the present embodiment, from a user's usage habit perspective, it is possible to achieve the aim of managing NFVI hardware by continuing to use and extending an information model of hardware asset in the traditional network management. Fig. 4 is a schematic diagram of an information model according to an exemplary embodiment of the present invention. As shown in Fig. 4, an attribute NFVI-PoP is added under an object ManagedElement for representing the Identifier (ID) of the NFVI access point to which a managed device belongs. And an attribute ResourcePool is added under an object InventoryUnit for representing the resource pool to which the hardware belongs.

In this example embodiment, the VIM constructs, based on Fig. 4, the hardware asset information base according to the hardware information of the NFVI. Fig. 5 is a schematic diagram of constructing a hardware asset information base based on the information model shown in Fig. 4 and according to a first exemplary embodiment of the present invention. The specific process is as follows:
a) creating the instance ManagedElementl of the managed object ManagedElement, and setting the added attribute NEVI-PoP equal to NfviPop1 ; the managed object instance represents the NFVI access point whose ID is NfviPop1 ;
b) creating the instances InventoryUnitRack, InventoryUnitShelf, and InventoryUnitPack of the managed object InventoryUnit, and setting the values of the added attribute ResourcePool as #1, #1, and #1; the managed object instances represent the rack, the shelf and the pack in turn; and, the InventoryUnitRack is included in the ManagedElement 1, the InventoryUnitShelf is included in the InventoryUnitRack, and the InventoryUnitPack is included in the InventoryUnitShelf.

The NMS or OSS sends a request for acquiring the hardware asset information to the NFVO.

The NFVO sends a request for acquiring the hardware asset information to the VIM.

The VIM sends the instances InventoryUnitRack, InventoryUnitShelf, and InventoryUnitPack representing the hardware asset information and attribute information to the NFVO according to the content of the asset information base.

The NFVO sends the received hardware asset information to the NMS or OSS.

### Example embodiment two

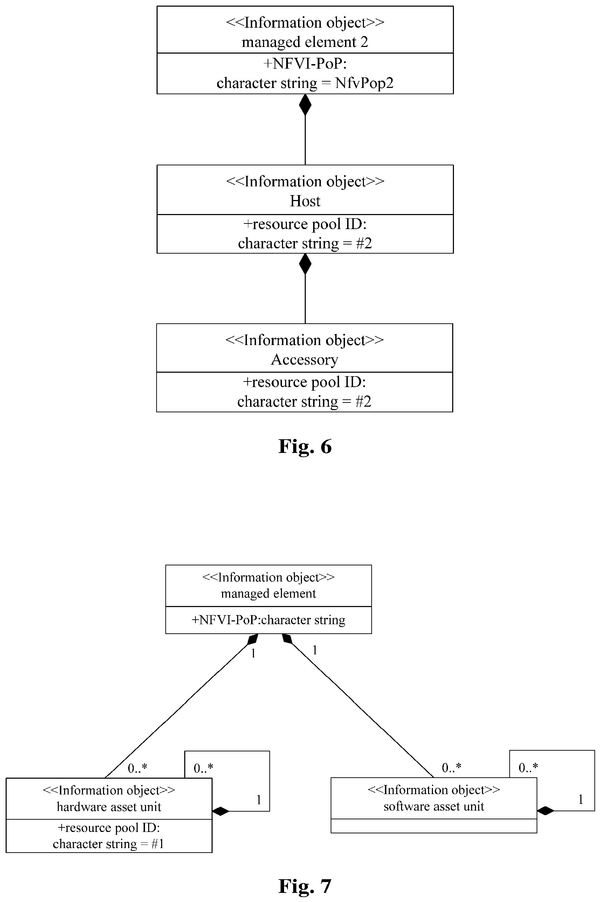

In this embodiment, the NFVO acquires the hardware information of the NFVI from the VIM and constructs the hardware asset information base based on Fig. 4. Fig. 6 is a schematic diagram of constructing a hardware asset information base based on the information model shown in Fig. 4 and according to a second exemplary embodiment of the present invention. The specific process is as follows:
a) creating the instance ManagedElement2 of the managed object ManagedElement, and setting the added attribute NEVI-PoP equal to NfviPop2; the managed object instance represents the NFVI access point whose ID is NfviPop2;
b) creating the instances InventoryUnitHost and InventoryUnitAccessory of the managed object InventoryUnit, and setting the values of the added attribute ResourcePool as #2 and #2; the two managed object instances represent a host and an accessory respectively, which are included in the ManagedElement2.

The NMS or OSS sends the request for acquiring the hardware asset information to the NFVO.

The NFVO sends the instances InventoryUnitHost and InventoryUnitAccessory representing the hardware asset information to the NMS or OSS according to the content of the asset information base.

### Example embodiment three

In this embodiment, it is possible to achieve an aim of managing the NFVI hardware and software assets by extending the existing information model of hardware and software assets. Fig. 7 is a schematic diagram of another information model according to an exemplary embodiment of the present invention. As shown in Fig. 7, the attribute NFVI-PoP is added under the ManagedElement for representing the ID of the NFVI-PoP to which the managed device belongs, and the attribute ResourcePool is added under a hardware asset unit (InventoryUnitHw) for representing the resource pool to which the hardware belongs.

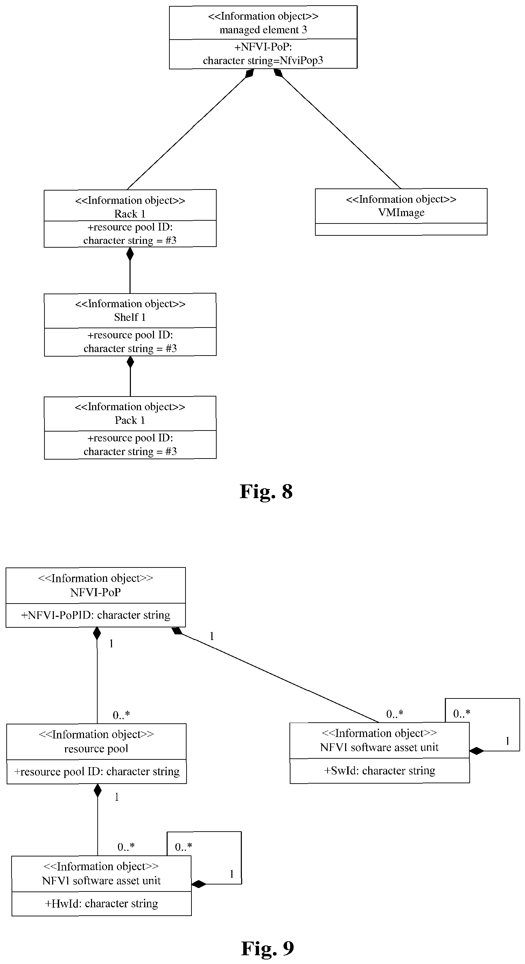

In this embodiment, the VIM constructs the asset information base according to the hardware and software information of the NFVI and based on the extended information model. Fig. 8 is a schematic diagram that the VIM constructs, based on an extended information model and according to hardware and software information of the NFVI, the asset information base according to an exemplary embodiment of the present invention. As shown in Fig. 8, the specific process is as follows:
a) creating the instance ManagedElement3 of the managed object ManagedElement, and setting the added attribute NEVI-PoP equal to NfviPop3; the managed object instance represents the NFVI access point whose ID is NfviPop3;
b) creating the instances InventoryUnitRack1, InventoryUnitShelf1, and InventoryUnitPack1 of the managed object InventoryUnitHw, and setting the values of the added attribute ResourcePool as #3, #3, and #3; the managed object instances represent the rack, the shelf and the pack in turn; and, the InventoryUnitRack1 is included in the ManagedElement3, the InventoryUnitShelf1 is included in the InventoryUnitRack1, and the InventoryUnitPack1 is included in the InventoryUnitShelf1;
c) creating the instance InventoryUnitVMImage of a software asset unit (InventoryUnitSw) of the managed object, which is included in the ManagedElement3 and represents the VMImage file.

The NMS or OSS sends a request for acquiring hardware and software asset information to the NFVO.

The NFVO sends a request for acquiring hardware and software asset information to the VIM.

The VIM sends the instances InventoryUnitRack1, InventoryUnitShelf1, InventoryUnitPack1 and InventoryUnitVMImage representing hardware asset and software asset information to the NFVO according to the content of the asset information base.

The NFVO sends the received hardware asset and software asset information to the NMS or OSS.

### Example embodiment four

In this embodiment, Fig. 9 is a schematic diagram of building a new information model for the NFVI asset according to an exemplary embodiment of the present invention. As shown in Fig. 9, the NFVI-PoP represents the managed object of the NFVI access point, and attributes of the NFVI-PoP includes, but is not limited to, the ID of the NFVI-PoP. The ResourcePool represents the managed object of the resource pool, and attributes of the ResourcePool includes, but is not limited to, the resource pool ID. The NFVIInventoryUnitHw represents the object of the NFVI hardware asset, and attributes of the NFVIInventoryUnitHw includes, but is not limited to, a hardware ID. The NFVIInventoryUnitSw represents the object of the NFVI software asset, and attributes of the NFVIInventoryUnitSw includes, but is not limited to, a software ID.

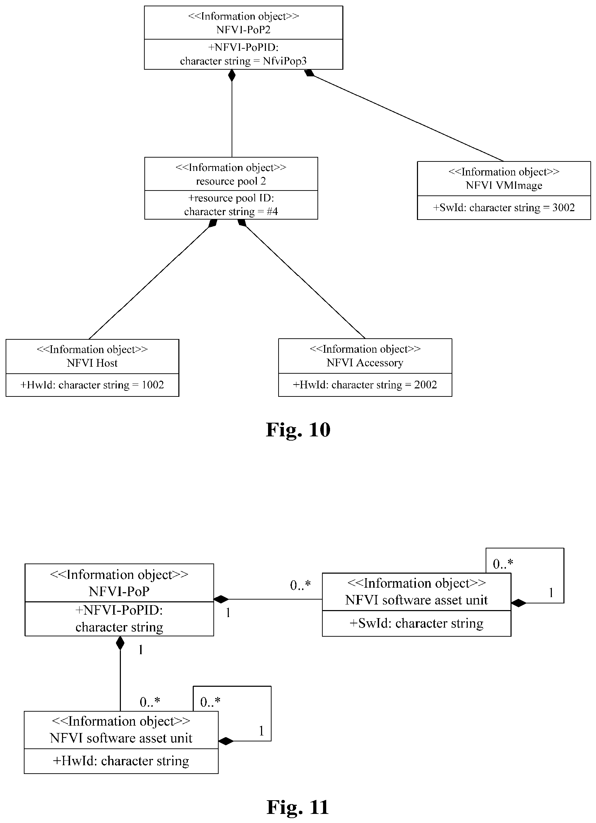

In this embodiment, the VIM constructs the asset information base according to the hardware and software information of the NFVI and based on the new information model. Fig. 10 is a schematic diagram that the VIM constructs, based on the new information model and according to the hardware and software information of the NFVI, the asset information base according to an exemplary embodiment of the present invention. As shown in Fig. 10, the specific process is as follows:
a) creating the instance NFVI-PoP2 of the managed object NFVI-PoP, and setting the attribute NEVI-PoP equal to NfviPop3; the managed object instance represents the NFVI access point whose ID is NfviPop4;
b) creating the instance ResourcePool2 of the managed object ResourcePool, and setting the attribute ResourcePoolld equal to #4; the managed object instance represents the resource pool whose ID is #4;
c) creating the instances NFVIInventoryUnitHost and NFVIInventoryUnitAccessory of the managed object, which are included in the ResourcePool2; the attributes Hwld are 1002 and 2002 respectively, representing the host whose ID is 1002 and the accessory whose ID is 2002;
d) creating the instance NFVIInventoryUnitVMImage of the managed object NFVIInventoryUnitSw, which is included in the NFVI-PoP1; the attribute Swld is 3002, representing the VMImage file whose ID is 3002.

The NMS or OSS sends the request for acquiring the hardware and software asset information to the NFVO.

The NFVO sends the request for acquiring the hardware and software asset information to the VIM.

The VIM sends the instances NFVIInventoryUnitHost, NFVIInventoryUnitAccessory and NFVIInventoryUnitVMImage representing the hardware asset and software asset information to the NFVO according to the content of the asset information base.

The NFVO sends the received hardware asset and software asset information to the NMS/OSS.

### Example embodiment five

In this embodiment, Fig. 11 is a schematic diagram of building the new information model based on the NFVI asset according to an exemplary embodiment of the present invention. As shown in Fig. 11, the NFVI-PoP represents the managed object of the NFVI access point, and attributes of the NFVI-PoP includes, but is not limited to, the ID of the NFVI-PoP. The NFVIInventoryUnitHw represents the object of the NFVI hardware asset, and attributes of the NFVIInventoryUnitHw includes, but is not limited to, the hardware ID and the resource pool ID. The NFVIInventoryUnitSw represents the object of the NFVI hardware asset, and attributes of the NFVIInventoryUnitSw includes, but is not limited to, the hardware ID; the NFVIInventoryUnitHw and the NFVIInventoryUnitSw continues to use the existing InventoryUnitHw and InventoryUnitSw.

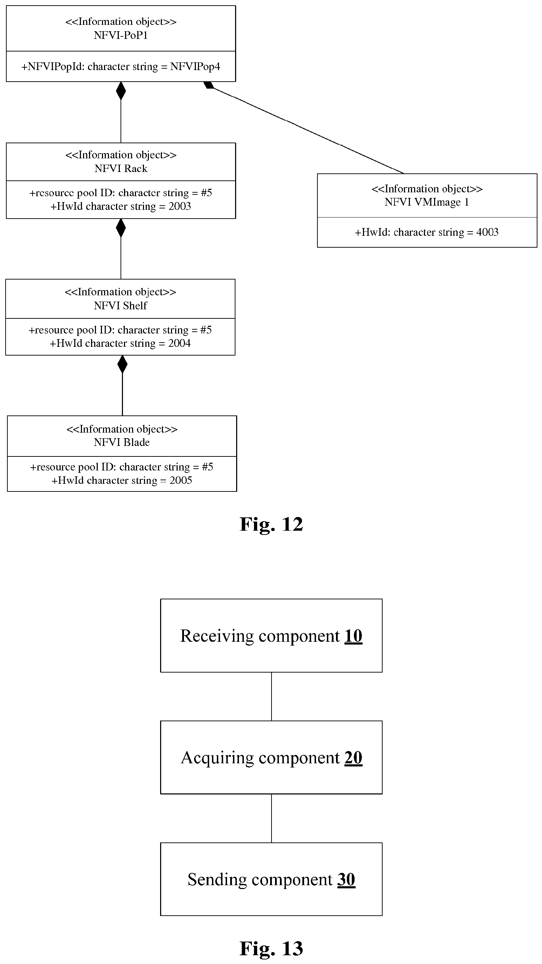

In this embodiment, the VIM constructs the asset information base according to the hardware and software information of the NFVI and based on the new information model. Fig. 12 is a schematic diagram that the VIM constructs, based on the new information model and according to the hardware and software information of the NFVI, the asset information base according to an exemplary embodiment of the present invention. As shown in Fig. 12, the specific process is as follows:
a) creating the instance NFVI-PoP1 of the managed object NFVI-PoP, and setting the attribute NEVI-PoP equal to NfviPop4; the managed object instance represents the NFVI access point whose ID is NfviPop4;
b) creating the instances NFVIInventoryUnitRack, NFVIInventoryUnitShelf and NFVIInventoryUnitPack of the managed object NFVIInventoryUnitHw, and setting the attribute ResourcePoolId equal to #4; the managed object instance represents the resource pool whose ID is #4; the attributes Hwld are 2003, 2004 and 2005 respectively; the ResourcePoolId is #5, representing the rack whose ID is 2003, the shelf whose ID is 2004 and the pack whose rack is 2005;
c) creating the instance NFVIInventoryUnitVMImage1 of the managed object NFVIInventoryUnitSw, which is included in the NFVI-PoP2; the attribute Swld is 4003, representing the VMImage file whose ID is 4003.

The NMS or OSS sends the request for acquiring the hardware and software asset information to the NFVO.

The NFVO sends the request for acquiring the hardware and software asset information to the VIM.

The VIM sends the instances NFVIInventoryUnitRack, NFVIInventoryUnitShelf, NFVIInventoryUnitPack and NFVIInventoryUnitVMImage1 representing the hardware asset and software asset information and the attribute information to the NFVO according to the content of the asset information base.

The NFVO sends the received hardware asset and software asset information to the NMS or OSS.

Fig. 13 is a structural block diagram of a device for asset information management according to an embodiment of the present invention. As shown in Fig. 13, the device for asset information management includes: a receiving component 10 to receive the request message from the NFVO, and the request message is used for acquiring the NFVI asset information, and the NFVI asset information includes at least one of the NFVI hardware asset and the NFVI software asset; an acquiring component 20 to acquire the NFVI asset information according to the request message; and a sending component 30 to send the NFVI asset information to the NFVO.

By using the device as shown in Fig. 13, the problem in the related art that the asset information of network element is not acquired effectively after network function visualization is solved, so that an operator can fully know the asset information, including hardware asset information and software asset information, of each access point after network function virtualization, so as to facilitate topology presentation.

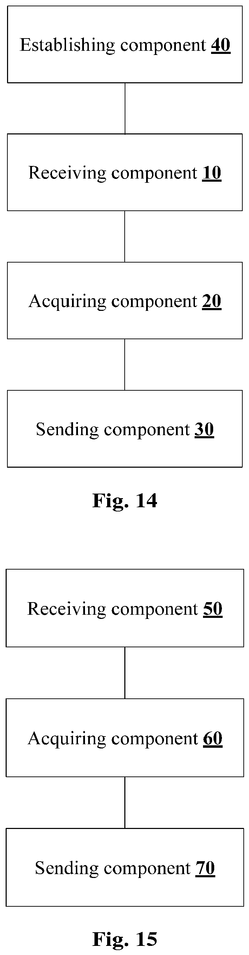

In one embodiment, as shown in Fig. 14, the device furthers include: an establishing component 40 to establish the asset information base according to the NFVI information.

In one embodiment, the acquiring component 20 is configured to acquire the NFVI asset information from the asset information base according to the request message.

In one embodiment, the establishing component 40 includes: a first creating element (not shown in the figure) to create the management object instance representing the NFVI access point; a second creating element (not shown in the figure) to create the management object instance representing the resource pool; a third creating element (not shown in the figure) to create at least one management object instance representing the NFVI hardware asset, and/or create at least one management object instance representing the NFVI software asset. The management object instance representing the NFVI access point includes the management object instance representing the resource pool, and the management object instance representing the resource pool includes at least one of at least one management object instance representing the NFVI hardware asset and at least one management object instance representing the NFVI software asset.

In one embodiment, the establishing component 40 includes: a fourth creating element (not shown in the figure) to create the management object instance representing the NFVI access point; a fifth creating element (not shown in the figure) to create at least one management object instance representing the NFVI hardware asset, and/or create at least one management object instance representing the NFVI software asset. The management object instance representing the NFVI access point includes at least one of at least one management object instance representing the NFVI hardware asset and at least one management object instance representing the NFVI software asset.

Fig. 15 is a structural block diagram of another device for asset information management according to an embodiment of the present invention. As shown in Fig. 15, the device for asset information management includes: a receiving component 50 to receive the request message from the NMS or OSS, and the request message is used for acquiring the NFVI asset information, and the NFVI asset information includes at least one of the NFVI hardware asset and the NFVI software asset; an acquiring component 60 to acquire the NFVI asset information according to the request message; and a sending component 70 to send the NFVI asset information to the NMS or OSS.

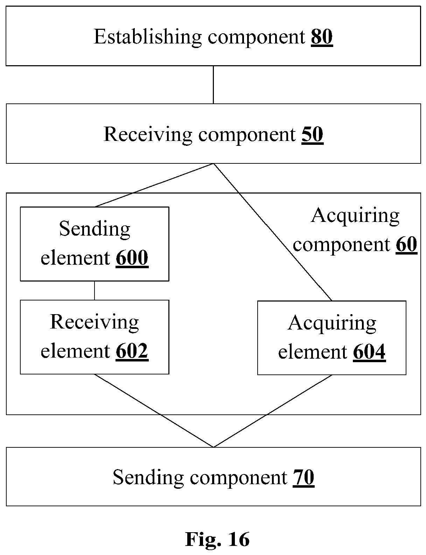

In one embodiment, as shown in Fig. 16, the acquiring component includes: a sending element 600 to send the request message to the VIM; and a receiving element 602 to receive the NFVI asset information from the VIM, and the NFVI asset information is determined according to the asset information base established by the VIM.

In one embodiment, as shown in Fig. 16, the device further includes: an establishing component 80 to establish an asset information base according to the NFVI information acquired from the VIM.

In one embodiment, as shown in Fig. 16, the acquiring component includes: an acquiring element 604 to acquire the NFVI asset information from the asset information base according to the request message.

In one embodiment, the establishing component 80 includes: a first creating element (not shown in the figure) to create the management object instance representing the NFVI access point; a second creating element (not shown in the figure) to create the management object instance representing the resource pool; a third creating element (not shown in the figure) to create at least one management object instance representing the NFVI hardware asset, and/or create at least one management object instance representing the NFVI software asset. The management object instance representing the NFVI access point includes the management object instance representing the resource pool, and the management object instance representing the resource pool includes at least one of at least one management object instance representing the NFVI hardware asset and at least one management object instance representing the NFVI software asset.

In one embodiment, the establishing component 80 includes: a fourth creating element (not shown in the figure) to create the management object instance representing the NFVI access point; a fifth creating element (not shown in the figure) to create at least one management object instance representing the NFVI hardware asset, and/or create at least one management object instance representing the NFVI software asset. The management object instance representing the NFVI access point includes at least one of at least one management object instance representing the NFVI hardware asset and at least one management object instance representing the NFVI software asset.

It can be seen from above description that the embodiments achieve the following technical effects (note that, these effects are achieved by some preferred embodiments): adopting the technical solution provided in the present invention can enable the operator to fully know the asset information, including the hardware asset information and the software asset information, of each access point after network function virtualization, so as to facilitate topology presentation.

Obviously, those skilled in the art should appreciate that the above components and steps of the present invention are implemented by a general-purpose computing device, and they are centralized in a single computing device or distributed on a network composed of multiple computing devices. Optionally, they are implemented by a program code which is capable of being executed by the computing device, so that they can be stored in a storage device and executed by the computing device. And in some situations, the presented or described steps are executed in an order different from that described here; or they are made into integrated circuit components, respectively; or multiple components and steps of them are made into a single integrated circuit component to realize. In this way, the present invention is not limited to any particular combination of hardware and software.

The above are the exemplary embodiments of the present invention and not intended to limit the present invention. For those skilled in the art, the present invention has various modifications and changes. Any modifications, equivalent replacements, improvements and the like within the scope as claimed in claims of the present invention shall fall within the scope of protection of the present invention.

### Industrial Applicability

As mentioned above, a method and device for asset information management provided in at least some embodiments of the present invention have the following beneficial effects: enabling the operator to fully know the asset information, including the hardware asset information and the software asset information, of each access point after network function virtualization, so as to facilitate topology presentation.

## Claims

1. A method for asset information management, comprising:
receiving, by a Virtualized Infrastructure Manager (VIM), a request message from a Network Function Virtualization Orchestrator (NFVO), wherein the request message is used for acquiring Network Function Virtualization Infrastructure (NFVI) asset information, and the NFVI asset information comprises at least one of an NFVI hardware asset and an NFVI software asset;
acquiring, by the VIM, the NFVI asset information according to the request message; and
sending, by the VIM, the NFVI asset information to the NFVO.

2. The method as claimed in claim 1, wherein before receiving, by the VIM, the request message from the NFVO, further comprising:
establishing, by the VIM, an asset information base according to NFVI information.

3. The method as claimed in claim 2, wherein acquiring, by the VIM, the NFVI asset information according to the request message comprises:
acquiring, by the VIM, the NFVI asset information from the asset information base according to the request message.

4. The method as claimed in claim 3, wherein establishing, by the VIM, the asset information base comprises:
creating, by the VIM, a managed object instance representing an NFVI access point;
creating, by the VIM, a managed object instance representing a resource pool;
creating, by the VIM, at least one managed object instance representing an NFVI hardware asset, and/or creating at least one managed object instance representing an NFVI software asset;
wherein, the managed object instance representing the NFVI access point comprises the managed object instance representing the resource pool, and the managed object instance representing the resource pool comprises at least one of at least one managed object instance representing the NFVI hardware asset and at least one managed object instance representing the NFVI software asset.

5. The method as claimed in claim 3, wherein establishing, by the VIM, the asset information base comprises:
creating, by the VIM, the managed object instance representing an NFVI access point;
creating, by the VIM, at least one managed object instance representing the NFVI hardware asset, and/or creating at least one managed object instance representing the NFVI software asset;
wherein, the managed object instance representing the NFVI access point comprises at least one of at least one managed object instance representing the NFVI hardware asset and at least one managed object instance representing the NFVI software asset.

6. A method for asset information management, comprising:
receiving, by a Network Function Virtualization Orchestrator (NFVO), a request message from a Network Management System (NMS) or Operation Support System (OSS), wherein the request message is used for acquiring Network Function Virtualization Infrastructure (NFVI) asset information, and the NFVI asset information comprises at least one of an NFVI hardware asset and an NFVI software asset;
acquiring, by the NFVO, the NFVI asset information according to the request message; and
sending, by the NFVO, the NFVI asset information to the NMS or OSS.

7. The method as claimed in claim 6, wherein acquiring, by the NFVO, the NFVI asset information according to the request message comprises:
sending, by the NFVO, the request message to a Virtualized Infrastructure Manager (VIM); and
receiving, by the NFVO, the NFVI asset information from the VIM, wherein the NFVI asset information is determined according to an asset information base established by the VIM.

8. The method as claimed in claim 6, wherein before receiving, by the NFVO, the request message from the NMS or OSS, further comprising:
establishing, by the NFVO, an asset information base according to the NFVI information acquired from the VIM.

9. The method as claimed in claim 8, wherein acquiring, by the NFVO, the NFVI asset information according to the request message comprises:
acquiring, by the NFVO, the NFVI asset information from the asset information base according to the request message.

10. The method as claimed in claim 9, wherein establishing, by the NFVO, the asset information base according to the NFVI information comprises:
creating, by the NFVO, a managed object instance representing an NFVI access point;
creating, by the NFVO, a managed object instance representing a resource pool;
creating, by the NFVO, at least one managed object instance representing an NFVI hardware asset, and/or creating at least one managed object instance representing an NFVI software asset;
wherein, the managed object instance representing the NFVI access point comprises the managed object instance representing the resource pool, and the managed object instance representing the resource pool comprises at least one of at least one managed object instance representing the NFVI hardware asset and at least one managed object instance representing the NFVI software asset.

11. The method as claimed in claim 9, wherein establishing, by the NFVO, the asset information base according to the NFVI information comprises:
creating, by the NFVO, the managed object instance representing the NFVI access point;
creating, by the NFVO, at least one managed object instance representing the NFVI hardware asset, and/or creating at least one managed object instance representing the NFVI software asset;
wherein, the managed object instance representing the NFVI access point comprises at least one of at least one managed object instance representing the NFVI hardware asset and at least one managed object instance representing the NFVI software asset.

12. A device for asset information management, comprising:
a receiving component to receive a request message from a Network Function Virtualization Orchestrator (NFVO), wherein the request message is used for acquiring Network Function Virtualization Infrastructure (NFVI) asset information, and the NFVI asset information comprises at least one of an NFVI hardware asset and an NFVI software asset;
an acquiring component to acquire the NFVI asset information according to the request message; and
a sending component to send the NFVI asset information to the NFVO.

13. The device as claimed in claim 12, wherein further comprising:
an establishing component to establish an asset information base according to NFVI information.

14. The device as claimed in claim 12, wherein the acquiring component is configured to acquire the NFVI asset information from the asset information base according to the request message.

15. The device as claimed in claim 14, wherein the establishing component comprises:
a first creating element to create a managed object instance representing an NFVI access point;
a second creating element to create a managed object instance representing a resource pool;
a third creating element to create at least one managed object instance representing an NFVI hardware asset, and/or create at least one managed object instance representing an NFVI software asset;
wherein, the managed object instance representing the NFVI access point comprises the managed object instance representing the resource pool, and the managed object instance representing the resource pool comprises at least one of at least one managed object instance representing the NFVI hardware asset and at least one managed object instance representing the NFVI software asset.

16. The device as claimed in claim 14, wherein the establishing component comprises:
a fourth creating element to create the managed object instance representing the NFVI access point;
a fifth creating element to create at least one managed object instance representing the NFVI hardware asset, and/or create at least one managed object instance representing the NFVI software asset;
wherein, the managed object instance representing the NFVI access point comprises at least one of at least one managed object instance representing the NFVI hardware asset and at least one managed object instance representing the NFVI software asset.

17. A device for asset information management, comprising:
a receiving component to receive a request message from a Network Management System (NMS) or Operation Support System (OSS), wherein the request message is used for acquiring Network Function Virtualization Infrastructure (NFVI) asset information, and the NFVI asset information comprises at least one of an NFVI hardware asset and an NFVI software asset;
an acquiring component to acquire the NFVI asset information according to the request message; and
a sending component to send the NFVI asset information to the NMS or OSS.

18. The device as claimed in claim 17, wherein the acquiring component comprises:
a sending element to send the request message to a Virtualized Infrastructure Manager (VIM); and
a receiving element to receive the NFVI asset information from the VIM, wherein the NFVI asset information is determined according to an asset information base established by the VIM.

19. The device as claimed in claim 17, wherein further comprising:
an establishing component to establish an asset information base according to the NFVI information acquired from the VIM.

20. The device as claimed in claim 19, wherein the acquiring component comprises:
an acquiring element to acquire the NFVI asset information from the asset information base according to the request message.

21. The device as claimed in claim 20, wherein the establishing component comprises:
a first creating element to create a managed object instance representing an NFVI access point;
a second creating element to create a managed object instance representing a resource pool;
a third creating element to create at least one managed object instance representing the NFVI hardware asset, and/or create at least one managed object instance representing the NFVI software asset;
wherein, the managed object instance representing the NFVI access point comprises the managed object instance representing the resource pool, and the managed object instance representing the resource pool comprises at least one of at least one managed object instance representing the NFVI hardware asset and at least one managed object instance representing the NFVI software asset.

22. The device as claimed in claim 20, wherein the establishing component comprises:
a fourth creating element to create the managed object instance representing the NFVI access point;
a fifth creating element to create at least one managed object instance representing the NFVI hardware asset, and/or create at least one managed object instance representing the NFVI software asset;
wherein, the managed object instance representing the NFVI access point comprises at least one of at least one managed object instance representing the NFVI hardware asset and at least one managed object instance representing the NFVI software asset.
